# EUROPEAN PATENT SPECIFICATION

(11) **EP 0 744 333 B1**
(45) Date of publication and mention of the grant of the patent: **26.01.2000**
(21) Application number: 96201359.5
(22) Date of filing: 21.05.1996
(51) Int. Cl.: B62J 1/00, B62J 11/00

(54) **Bicycle flask holder**
Flaschenhalter für Fahrrad
Porte-bouteille pour bicyclette

(30) Priority: 25.05.1995 IT PN950027
(43) Date of publication of application: 27.11.1996
(73) Proprietor: F.LLI BARRO GIOVANNI & LUIGI S.r.L., 31015 Conegliano (IT)
(72) Inventor: Barro, Giovanni, 31015 Conegliano (TV) (IT)
(74) Representative: Da Riva, Ermanno

(56) References cited:
- FR-A- 1 158 258
- FR-E- 61 820
- FR-E- 66 598
- GB-A- 2 159 784

## Description

The invention relates to a flask holder for bicycles comprising an independently mobile part for elastically gripping the flask applicable thereto.

In the sport or pastime of cycling, accessories called flask holders are well-known and are normally constituted by a simple structure made with a special metal rod bent to form a basket shape and fixable to the frame of a bicycle, and in which a container for water or other drinks, known as a flask, whose function is obvious, can be inserted and removed when needed.

The flasks normally used are practically standardized and are constituted by a cylindrical recipient provided at one end with a special cap, and are provided along their cylindrical part within a circumferential hollow.

Consequently also the most widely used flask holders are practically standardized, all presenting dimensions and conformations which are equivalent and substantially alike.

The basket of the common flask-holders is constituted by a structure formed by a rod, usually made of aluminium or suitable steel and in some cases, more recently, of titanium, conformed such as to form two first portions of a suitable length which are parallel and considerably neared, between which a plate is fixed, which plate is provided with holes for fixing to the structure of the bicycle frame. The bottom ends of said first portions are bent orthogonally in opposite direction to the fixing in such a way as to form two second portions wide apart between themselves. The respective ends of the second portions are further bent such as to form two third portions, slightly spread, upwards as well as somewhat inclined towards said first parallel portions and are finally bent at their upper ends in such a way as to connect to a fourth arched portion curved outwards and exhibiting a bending radius corresponding to about the diameter of the cylindrical part of the flask. The said two first parallel portions are terminating at their upper ends in respective short portions bent towards the opposite side to the fixing and connecting reciprocally to a relative transversal portion.

The above-described structure forms a basket in which the flask can be inserted. The bottom of the flask will rest on the said second horizontal portions and the cylindrical body of the flask will rest against the said first vertical portions. The flask resulting moreover fixed by said fourth arched portion which penetrates into the corresponding circumferential hollow of the flask as well as by the upper part of the said first vertical portions which being bent in an opposite direction to the fixing and thus engage on a corresponding arched part of the upper end of the flask.

A similar construction is visible in FR-A-1 158 258.

This structure is clearly considerably rigid, for which reason the insertion there-into as well as the removal therefrom of the flask is accomplished by exploiting the elasticity of the flask shell.

It follows that if said curved portion which penetrates into the circumferential hollow in the flask, for reasons of construction or in consequence of deformations which can derive from impacts suchlike, is too close to the opposite vertical portions, the insertion and the removal of the flask require from the user to act with efforts that can be also remarkable so that the use results difficult.

If instead on the contrary the curved portion for the same reasons is too distanced from the opposite vertical portions, the flask is not sufficiently well held, with consequent obvious drawbacks.

To obviate to the drawbacks deriving from an excessive or from an insufficient grip on the flask, the user normally acts on the flask holder structure itself, deforming it such as to distance or near said curved portions from the opposite part thereof to obtain a sufficiently functional positioning thereof.

Clearly such interventions are irrational and in the long run can provoke further drawbacks, and in any case functioning is somewhat insufficient and not functional.

The main aim of the present invention is to obviate to the above mentioned drawbacks and limitations, and to provide an improved flask holder which is illustrated in the drawings purely by way of not limitative example, and in which:
figure 1 is a lateral view of the flask-holder according to the invention;
figure 2 is the same flask-holder in frontal view;
figure 3 is a plan view of figure 1;
figure 4 is an enlarged view of a detail of the flask-holder, cutaway along lines I-I or II-II of figure 3; and
figure 5 shows the same flask holder in perspective view.

In the figures details are denoted by the same references with heavy continuous lines denoting the structure of the flask holder of the invention and light continuous lines denoting the body of the flask arranged therein.

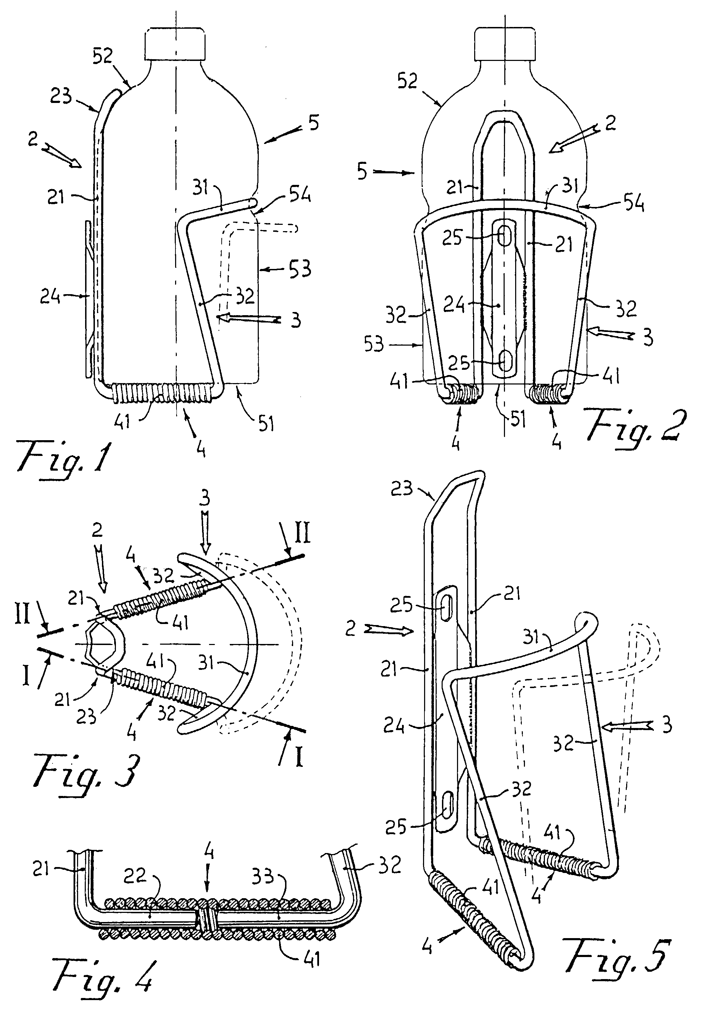

With reference to figures 1, 2 3 and 5, theflask holder 1 in this embodiment, object of the invention, is fundamentally constituted by a structure whose conformation and dimensions are all similar to those of the known flask holders.

This structure, in common with those of known type, is made of a metal rod bent appropriately, which instead to form a single element, forms two distinct parts, a first fixe part 2 which can be fixed in a known way to the frame of the bicycle and a second mobile part 3 which is connected to the fixed part 2 by suitable elastic means 4.

The first fixed part 2 is made, like the fixing part of known structures, of a metal rod bent in the shape of a U such as to form two first longitudinal portions 21 reciprocally parallel and near one to the other, which at their lower end are bent orthogonally such as to form two second short portions 22 (see figure 4) symmetrically spread apart, a short part 23 of the upper end of said first longitudinal portions 21 being further bent.

Between said first longitudinal portions 21 a plate 24 is welded, which plate 24 is provided with a pair of holes 25 and is specially shaped as to permit a traditional-type fixture of the flask holder structure on a corresponding part of the bicycle frame.

The length of said first longitudinal portions 21 is such as to allow the bottom 51 of the flask 5, which will be applied in the structure of the flask holder, to rest on the elastic element 4 which latter, as will better emerge from the following description, are applied on said second short portions 22 and to allow the corresponding arched part 52 of its upper end to rest against the relative short part 23 of the upper end of said first longitudinal portions 21 against which it will rest by its cylindrical part 53.

The second mobile part 3 is also constituted by a metal rod the same as that used to form said first fixed part 2 which is bent such as to form an arched portion 31 which extends over an approximately semicircular portion with a bending radius corresponding to the external diameter of the cylindrical part 53 of the flask 5 shell ; from the ends of said arched portion 31 about orthogonally thereto, two slightly converging longitudinal portions 32 depart symmetrically, and are further bent at ends thereof in an opposite direction to that of said arched portion 31 with further two short portions 33 (see figure 4) forming with the relative longitudinal portions 32 from which they depart an acute angle of about 75 degrees, being also reciprocally convergent such that, as will better emerge hereinbelow, after application of the elastic element 4 they are coaxial to said second short portions 22 of said first fixed part 2.

The longitudinal portions 32 extend over a certain length such that the external end of the arched portion 31 coincides with the bottom of the circumferential hollow 54 made on the cylindrical part 53 of the flask 5.

It is to be noted that the length of said second short portions 22 of said first fixed part 2 and the short portions 33 of said second mobile part 3 is about equal or preferably less than the length of the corresponding portions of the traditional structures on which the bottom of the flask 5 rests.

In the embodiment which is object of the present invention, on each of said second short portions 22 of the fixed part 2 and on the corresponding short portions 33 of the mobile part 3 a suitable elastic element 4 is inserted, as can be seen in figure 4, which in the preferred embodiment to which reference is herein made is constituted by a suitable coil spring 41 which is fixed in a known way and with suitable known means.

Obviously the elastic elements 4 can be constituted by special tubular sleeves made of suitable elastomeric materials or by other kinds of metal springs or by other flexible elements able to perform the same function.

From the aforegoing it is evident that the mobile part 3 of the new structure as above-described can be easily bent outwards as is clearly indicated in figures 1, 3 and 5 by the broken line, such that the introduction and/or removal of the flask is considerably easy and will not give rise to any drawback. Furthermore, the flask's return into the internal position generated by the elastic elements 4 gives a good hold each time.

The aforegoing evidences the simplicity of the described invention, which surely and reliably eliminates all the drawbacks of the equivalent known flask holders.

## Claims

1. A flask holder for bicycles, constituted by a structure made of a metal rod bent to form a first part (2) for the fixing to the frame of a bicycle and a second part (3) distanced from said first part (2) and together therewith forming a basket for containing a substantially cylindrical container for liquids commonly known as a flask (5), said first part(2) being constituted by a metal rod bent into a U shape to form two longitudinal portions (21 )of a suitable lenght and parallel one to another and neared that connect in their upper part (23) which is bent for a suitable portion, said second part being constituted by an arched portion (31) from ends of which two longitudinal portions (32) depart orthogonally thereto, which longitudinal portions are slightly reciprocally convergent, said first part (2) and said second part (3) being interconnected in the respective lower ends by connection portions made of the same metal rod, which connection portions extend orthogonally from the lower ends of said longitudinal portions (21) of said first part (2) as well as being reciprocally spread apart, connect them to the corresponding lower ends of the longitudinal portions (32) of said second part (3) with which they form an acute angle of about 75 degrees, said flask holder being characterised in that the said first part (2) and the said second part (3) are connected by suitable elastic elements (4), the elastic recall generated by said elastic elements (4) pushes said second part (3) against the flask body, that result so gripped between said second part (3) and said first part (2).

2. A flask holder as in claim 1, characterised in that said elastic elements (4) are constituted by a coil spring (41) engaging in its ends, on one side, on short portions (22) extending orthogonally as well as being outspread from the lower ends of said longitudinal elements (21) of said first part (2) and from the other side, on short portions(33) extending from the lower ends of said longitudinal elements (32) of said second part (3) which result furthennore coaxial to said short portions (22), said coil spring (41) being further fixed in known ways.

3. A flask holder as in claim 1, characterized in that said elastic elements (4) are constituted by lengths of tubular sleeves made of elastomeric material such as rubber or the like.

4. A flask holder as in claim 1, characterized in that said elastic elements (4) are constituted by elastic metal plates welded in their ends to the corresponding lower ends of said lon gitudinal elements (21) of said first part (2) and of the said longitudinal elements (32) of said second part (3).

## Patentansprüche

1. Flaschenhalter für Fahrräder, in Form einer Anordnung aus einer Metallstange, die so gebogen ist, dass sie einen ersten Teil (2) zur Befestigung am Rahmen eines Fahrrads und einen zweiten Teil (3) bildet, der vom ersten Teil (2) beabstandet ist und zusammen mit diesem einen Korb zum Aufnehmen eines im wesentlichen zylindrischen, gemeinhin als Feldflasche (5) bezeichneten Behälters für Flüssigkeiten bildet, wobei der erste Teil (2) durch eine U-förmig gebogene Metallstange gebildet ist, die zwei zueinander parallele Längsabschnitte (21) geeigneter Länge aufweist, welche in ihrem oberen, über eine geeignete Strecke gebogenen Teil (23) einander angenähert und miteinander verbunden sind, wobei der zweite Teil aus einem bogenförmigen Abschnitt (31) besteht, von dessen Enden senkrecht hierzu zwei Längsabschnitte (32) abgehen und geringfügig aufeinander zulaufen, wobei der erste Teil (2) und der zweite Teil (3) an ihren jeweiligen unteren Enden durch aus derselben Metallstange bestehende Verbindungsabschnitte miteinander verbunden sind, die von den unteren Enden der Längsabschnitte (21) des ersten Teils (2) senkrecht abstehen und auseinanderlaufen und sie mit den entsprechenden unteren Enden der Längsabschnitte (32) des zweiten Teils (3) verbinden, mit denen sie einen spitzen Winkel von ungefähr 75 Grad bilden, wobei der Flaschenhalter dadurch gekennzeichnet ist, dass der erste Teil (2) und der zweite Teil (3) durch geeignete elastische Elemente (4) miteinander verbunden sind, die von den elastischen Elementen (4) erzeugte elastische Rückstellkraft den zweiten Teil (3) gegen den Flaschenkörper drückt, so dass dieser zwischen dem zweiten Teil (3) und dem ersten Teil (2) gehalten wird.

2. Flaschenhalter nach Anspruch 1, dadurch gekennzeichnet, dass die elastischen Elemente (4) durch Schraubenfedern (41) gebildet sind, deren Enden einerseits kurze Abschnitte (22), die von den unteren Enden der Längsabschnitte (21) des ersten Teils (2) senkrecht abstehen und auseinanderlaufen, und andererseits kurze Abschnitte (33), die von den unteren Enden der Längsabschnitte (32) des zweiten Teils (3) abstehen und dabei koaxial zu den kurzen Abschnitten (22) verlaufen, fassen, wobei die Schraubenfedern (41) im übrigen in an sich bekannter Weise befestigt sind.

3. Flaschenhalter nach Anspruch 1, dadurch gekennzeichnet, dass die elastischen Elemente (4) durch rohrförmige Hülsenstücke aus einem Elastomerwerkstoff, wie zum Beispiel Gummi oder dergleichen, gebildet sind.

4. Flaschenhalter nach Anspruch 1, dadurch gekennzeichnet, dass die elastischen Elemente (4) durch elastische Metallscheiben gebildet sind, deren Enden an die jeweiligen unteren Enden der Längsabschnitte (21) des ersten Teils (2) und der Längsabschnitte (32) des zweiten Teils (3) geschweißt sind.

## Revendications

1. Porte-bouteille pour bicyclettes, constitué par une structure faite d'une tige métallique pliée pour former une première partie (2) pour la fixation sur le cadre d'une bicyclette et une seconde partie (3) éloignée de ladite première partie (2) et formant ensemble avec celle-ci un panier destiné à contenir un conteneur essentiellement cylindrique pour des liquides communément appelé bouteille (5), ladite première partie (2) étant constituée par une tige métallique pliée en forme de U pour former deux portions longitudinales (21) d'une longueur adaptée et parallèles l'une par rapport à l'autre et rapprochées qui se joignent en leur partie supérieure (23) qui est pliée pour former une portion adaptée, ladite seconde partie étant constituée par une portion arquée (31) à partir des extrémités de laquelle deux portions longitudinales (32) s'éloignent de manière orthogonale par rapport à celle-ci, lesdites portions longitudinales sont légèrement convergentes de manière réciproque, ladite première partie (2) et ladite seconde partie (3) étant interconnectées en leurs extrémités inférieures respectives par des portions de connexion faites de la même tige métallique, lesdites portions de connexion s'étendent de manière orthogonale depuis les extrémités inférieures desdites portions longitudinales (21) de ladite première partie (2) tout en étant éloignées de manière réciproque et les connectent aux extrémités inférieures correspondantes des portions longitudinales (32) de ladite seconde partie (3) avec laquelle elles forment un angle aigu d'environ 75°, ledit porte-bouteille étant caractérisé en ce que ladite première partie (2) et ladite seconde partie (3) sont connectées par des éléments élastiques adaptés (4), le rappel élastique généré par lesdits éléments élastiques (4) pousse ladite seconde partie (3) contre le corps de la bouteille qui est ainsi saisi entre ladite seconde partie (3) et ladite première partie (2).

2. Porte-bouteille selon la revendication 1, caractérisé en ce que lesdits éléments élastiques (4) sont constitués par un ressort à boudin (41) s'engageant en ses extrémités, sur un côté, sur des portions courtes (22) s'étendant de manière orthogonale et déployées depuis les extrémités inférieures desdits éléments longitudinaux (21) de ladite première partie (2) et, de l'autre côté, sur des portions courtes (33) s'étendant depuis lesdites extrémités inférieures desdits éléments longitudinaux (32) de ladite seconde partie (3) qui sont de plus coaxiales par rapport auxdites portions longitudinales (22), ledit ressort à boudin (41) étant également fixé de manière connue.

3. Porte-bouteille selon la revendication 1, caractérisé en ce que lesdits éléments élastiques (4) sont constitués par des longueurs de manchons tubulaires faits en matériau élastomère tel que du caoutchouc ou analogue.

4. Porte-bouteille selon la revendication 1, caractérisé en ce que lesdits éléments élastiques (4) sont constitués par des plaques métalliques élastiques soudées en leurs extrémités aux extrémités inférieures correspondantes sur lesdits éléments longitudinaux (21) de ladite première partie (2) et desdits éléments longitudinaux (32) de ladite seconde partie (3).
